(19) Europäisches Patentamt
European Patent Office
Office européen des brevets

(11) Veröffentlichungsnummer: **0 101 808**
**A2**

# (12) EUROPÄISCHE PATENTANMELDUNG

(21) Anmeldenummer: **83105962.1**

(51) Int. Cl.³: **H 01 B 1/12**

(22) Anmeldetag: **18.06.83**

(30) Priorität: **29.06.82 DE 3224159**
**29.06.82 DE 3224160**

(43) Veröffentlichungstag der Anmeldung:
**07.03.84 Patentblatt 84/10**

(84) Benannte Vertragsstaaten:
**DE FR GB IT NL**

(71) Anmelder: **BAYER AG**
**Konzernverwaltung RP Patentabteilung**
**D-5090 Leverkusen 1 Bayerwerk(DE)**

(72) Erfinder: **Kossmehl, Gerhard, Prof. Dr.**
**Grabenstrasse 38 f**
**D-1000 Berlin 45(DE)**

(72) Erfinder: **Hocker, Jürgen, Dr.**
**Eichenweg 6**
**D-5060 Bergisch-Gladbach(DE)**

## (54) Oxidierende Polymerisation mit AsF5.

(57) Verfahren zur Herstellung dotierter heterocyclischer Polymerer, in dem man schwefelfreie heteroaromatische Verbindungen mit Arsenpentafluorid, gegebenenfalls in der Gasphase bzw. in einem inerten organischen Lösungsmittel bei Temperaturen von −20°C bis +80°C (oder dem Siedepunkt des Lösungsmittels) umsetzt, und die nach diesem Verfahren erhaltenen dotierten heterocyclischen Polymeren.

EP 0 101 808 A2

0101808

BAYER AKTIENGESELLSCHAFT 5090 Leverkusen, Bayerwerk
Zentralbereich G/Rz
Patente, Marken und Lizenzen

## Oxidierende Polymerisation mit $AsF_5$

Die Erhöhung der Leitfähigkeit durch Dotierung von geeigneten Polymeren mit $AsF_5$ ist bekannt.

Gegenstand dieser Erfindung ist ein Verfahren zur Herstellung dotierter heterocyclischer Polymerer, das dadurch gekennzeichnet ist, daß man niedermolekulare schwefelfreie heteroaromatische Verbindungen mit Arsenpentafluorid umsetzt, sowie die nach diesem Verfahren erhaltenen Polymeren.

Werden nun erfindungsgemäß niedermolekulare schwefelfreie heteroaromatische Verbindungen (auch solche mit zwei oder mehreren heteroaromatischen Ringsystemen, die auch Teil eines konjugierten $\pi$-Elektronensystems sein können) mit $AsF_5$ umgesetzt, so entstehen nicht die zu erwartenden niedermolekularen Salze. Es werden vielmehr durch kombinierte Polymerisation und Dotierung leitfähige Polymere erhalten. Besonders bevorzugt ist die Umsetzung von ungesättigten 5-Ring-Heterocyclen mit $AsF_5$. Diese Reaktion gelingt z. B. mit Pyrrol, Furan, Pyrazol, Imidazol, Oxazol, die durch Halogen, Alkyl, Alkoxicarbonyl oder Hydroxi substituiert sein können, Pyridin, 4,4'-Bipyridyl und deren Substitutionsprodukten, verknüpften Heterocyclen, sowie mit Verbindungen, bei denen aromatische, substituiert aromatische bzw. heteroaromatische Ringsysteme mit Heterocyclen kondensiert sind. In allen Fällen entstehen dotierte Polymere, die gute elektrische Leitfähigkeiten aufweisen.

Bei diesen Umsetzungen kann $AsF_5$ in unpolaren, absolut wasserfreien Lösungsmitteln wie z.B. Hexan, Benzol, Toluol, Dichlormethan, 1,2-Dichlorethan, oder deren Mischungen sowohl unter Luft, Stickstoff oder Argon bei Temperaturen zwischen -20°C bis zur Siedetemperatur des jeweiligen Lösungsmittels eingesetzt werden.

Bevorzugt läßt man jedoch gasförmiges $AsF_5$ bei Temperaturen zwischen -40°C und +120°C auf die feste, flüssige oder gasförmige heterocyclische Verbindung einwirken, wobei das erfindungsgemäße Polymere in Form eines schwarzen Pulvers oder einer schwarzen Folie entsteht.

Einige dieser erhaltenen Polymeren sind gegen Luftfeuchtigkeit und zum Teil auch gegen Hydrolyse recht stabil. Andere Polymere werden durch mehrstündiges Rühren mit Wasser, Ethanol bzw. 25%iger $NH_4OH$ bei Raumtemperatur teilweise bis vollständig zu den entsprechenden Polyheteroarylenen hydrolysiert. Bei der Hydrolyse mit $NH_4OH$ kann auch Aminierung eintreten.

Die Struktur der erhaltenen Polymere ist durch Elementaranalysen, IR-Spektren sowie massenspektrometrische Untersuchungen bestätigt.

Die IR-Spektren dieser Polymere mit Salzstruktur weisen außer den für die eingesetzten Grundkörper bzw. Polymere charakteristischen Banden für die heteroaromatischen Baueinheiten die charkateristischen Banden für $AsF_5$ auf.

Die erfindungsgemäßen Polymeren können als elektrisch leitende oder halbleitende Bauelemente z.B. in Flächenheizleitern, in elektronischen Devices, als Batterieelemente, in Kondensatoren, für photovoltaische Wandler, sowie zur Abschirmung elektromagnetischer Strahlung angewendet werden.

Gegenstand der Erfindung sind weiterhin Dotierungsprodukte von Polymeren der Formel

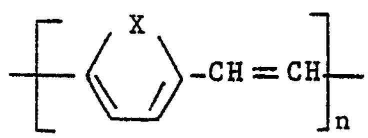

(I)

wobei

X für O oder S steht, und

n eine ganze Zahl $>10$ bedeutet,

und ein Verfahren zu ihrer Herstellung.

Die Ausgangsmaterialien Poly(2.5-thiophendiylvinylen) und Poly(2.5-furandiylvinylen) sind an sich bekannt. Das Thiophendiylderivat kann erhalten werden gemäß Makromol. Chem. 131, 15 (1970) und 131, 37 (1970) und das Furandiylderivat durch basenkatalysierte Selbstkondensation von 5-Methylfuran-2-carbaldehyd.

Es wurde nun gefunden, daß man diese Polymere mit an sich bekannten Dotierungsmitteln behandeln kann, z.B. mit Protonensäuren wie z.B. $H_2SO_4$, $HClO_4$, $H_2Cr_2O_7$, HJ, $HNO_3$, mit Lewis-Säuren wie z.B. $SbCl_5$, $AsCl_5$, $TiCl_4$, $FeCl_3$, $SnCl_4$ oder mit $AsF_5$ oder mit Halogen wie z. B. Iod. Diese Behandlung kann im allgemeinen so durchgeführt werden, daß man Dämpfe oder Lösungen des Dotierungsmittels auf die Polymeren einwirken läßt. Meist arbeitet man bei etwa 10 - 30°C und unter Luft- und Feuchtigkeitsausschluß. Die Behandlung kann einige Stunden oder auch Tage dauern. Im einfachsten Fall bringt man eine Probe des Polymeren und eine Probe des Dotierungsmittels in einen Exsiccator, evakuiert und überläßt sie sich dann selbst. Die Dotierung ist an einer Farbänderung der Proben erkennbar. Die Polymerisate sind im allgemeinen gelb bis farblos und werden durch die Dotierung dunkelbraun bis schwarz. Nach der Dotierung haben die Produkte eine um mehrere Größenordnungen erhöhte elektrische Leitfähigkeit.

Die erfindungsgemäßen Polymeren können z. B. als elektrisch leitende oder halbleitende Bauelemente, z.B. in Flächenheizleitern, in elektronischen Devices, als Batterieelemente, in Kondensatoren, für photovoltaische Wandler sowie zur Abschirmung elektromagnetischer Strahlung angewendet werden.

## BEISPIELE

### Beispiele 1 bis 12

Allgemeine Arbeitsvorschrift:

Die niedermolekularen Heterocyclen werden in ein Vakuumgefäß gebracht. Man evakuiert und läßt bei Raumtemperatur $AsF_5$ einströmen. $AsF_5$-Druck bzw. -Einwirkungszeit vergl. Tabelle.

Es bilden sich schwarze, unlösliche und unschmelzbare Pulver oder Folien, die von der Wand des Reaktionsgefäßes entfernt werden können.

Tabelle - Beispiele 1 bis 12

| Beispiel | Ausgangsmaterial | $AsF_5$-Druck [Torr] | Reaktionszeit [Std.] | $\sigma$ 298K [$\Omega^{-1}cm^{-1}$] | |
|---|---|---|---|---|---|
| 1 | Pyrrol | 550 | 48 | $1,3 \times 10^{-4}$ | Pulver |
| 2 | Furan | 550 | 72 | $3,1 \times 10^{-8}$ | (Pulver) |
| 3 | Furan | 450 | 72 | $1,8 \times 10^{-1}$ | (Folie) |
| 4 | Pyridin | 450 | 72 | $1,8 \times 10^{-10}$ | Pulver |
| 5 | 4,4'-Bipyridyl | 500 | 24 | $3,4 \times 10^{-9}$ | Pulver |
| 6 | 1-Methylimidazol | 900 | 12 | $1 \times 10^{-7}$ | Pulver |
| 7 | 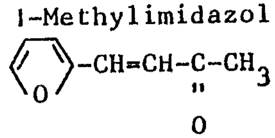 | 300 | 24 | $6,4 \times 10^{-6}$ | Folie |
| 8 | 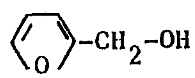 | 900 | 24 | $6,3 \times 10^{-6}$ | Folie |
| 9 | 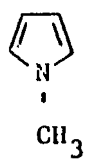 | 900 | 24 | $6 \times 10^{-5}$ | Pulver |
| 10 | α-Picolin | 900 | 24 | $2 \times 10^{-6}$ | Pulver |
| 11 | β-Picolin | 800 | 24 | $6 \times 10^{-8}$ | Pulver |
| 12 | γ-Picolin | 900 | 24 | $5,3 \times 10^{-7}$ | Pulver |

Beispiel 13

10 Gew.-Tle Polythiophendiylvinylen werden in einem geschlossenen Gefäß mit 20 Gew.-Tln Jod sich selbst überlassen. Nach 24 Std. hat sich das Polythiophendiylvinylen schwarz gefärbt. Man entnimmt 18 Gew.-Tle dotiertes Polythiophendiylvinylen mit einer spezifischen Leitfähigkeit von $2 \times 10^{-4} \Omega^{-1} cm^{-1}$.

Beispiel 14

Analog Beispiel 13 werden 10 Gew.-Tle Polyfurandiylvinylen mit 20 Gew.-Tln Jod zusammengebracht. Man erhält 16,5 Gew.-Tle dotiertes Produkt mit einer spezifischen Leitfähigkeit von $2 \times 10^{-3} \Omega^{-1} cm^{-1}$.

Beispiel 15

10 Gew.-Tle Polyfurandiylvinylen werden in einem evakuierten Gefäß mit 12 Gew.-Tln gasförmigem $AsF_5$ zusammengebracht. Das Produkt wird sofort schwarz. Nach 8 Std. entnimmt man 18,5 Gew.-Tle dotiertes Produkt mit einer spezifischen Leitfähigkeit von $6 \times 10^{-1} \Omega^{-1} cm^{-1}$.

Beispiel 16

10 Gew.-Tle Polythiophendivinylen werden in einem evakuierten Gefäß mit einem Überschuß an $HClO_4$ (in getrennten Behältern) gestellt. Nach 30 Tagen entnimmt man 14,5 Gew.-Tle eines dunklen Pulvers mit einer spezifischen Leitfähigkeit von $4,8 \times 10^{-8} \Omega^{-1} cm^{-1}$.

Patentansprüche:

1. Verfahren zur Herstellung dotierter heterocyclischer Polymerer, dadurch gekennzeichnet, daß man schwefelfreie heteroaromatische Verbindungen mit Arsenpentafluorid, gegebenenfalls in der Gasphase bzw. in einem inerten organischen Lösungsmittel bei Temperaturen von $-40^{\circ}C$ bis $+120^{\circ}C$ (oder dem Siedepunkt des Lösungsmittels) umsetzt.

2. Dotierte heterocyclische Polymere, erhalten gemäß dem Verfahren nach Anspruch 1.

3. Dotierungsprodukte von Polymeren der Formel

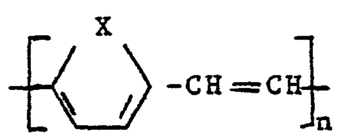 (I)

worin

X = O, S und

n eine ganze Zahl >10 bedeuten.

4. Verfahren zur Herstellung von Dotierungsprodukten von Polymeren der Formel

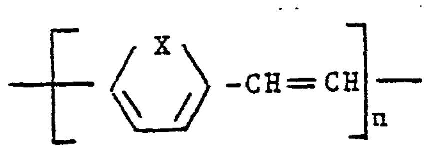

worin

X = O oder S, und

n eine ganze Zahl >10 bedeuten,

dadurch gekennzeichnet, daß man solche Polymere mit einer Protonsäure, einer Lewis-Säure oder mit Halogen behandelt.